# EUROPÄISCHE PATENTSCHRIFT

(11) **EP 3 627 771 B1**
(45) Veröffentlichungstag und Bekanntmachung des Hinweises auf die Patenterteilung: **16.06.2021**
(21) Anmeldenummer: 19197031.8
(22) Anmeldetag: 12.09.2019
(51) Int. Cl.: H04L 12/26

(54) **VERFAHREN ZUM PRÜFEN DES SPEZIFIKATIONSGERECHTEN VERHALTENS VON BUSTEILNEHMERN AN EINEM CAN-FD-BUS**
METHOD FOR CHECKING THE BEHAVIOR OF BUS UNITS ON A CAN FD-BUS IN LINE WITH SPECIFICATIONS
PROCÉDÉ DE VÉRIFICATION DU COMPORTEMENT CONFORME AUX SPÉCIFICATIONS DES ABONNÉS DU BUS SUR UN BUS CAN FD

(30) Priorität: 18.09.2018 DE 102018122873
(43) Veröffentlichungstag der Anmeldung: 25.03.2020
(73) Patentinhaber: Göpel electronic GmbH, 07745 Jena (DE)
(72) Erfinder: RAUH, Steffen, 07747 Jena (DE); MANTHEY, Christopher, 07745 Jena (DE)
(74) Vertreter: Oehmke, Volker

(56) Entgegenhaltungen:
- DE-A1-102004 002 771
- DE-A1-102009 039 200
- US-A1- 2011 035 180
- US-A1- 2012 155 285

## Beschreibung

Die Erfindung betrifft ein Verfahren zum Prüfen des spezifikationsgerechten Verhaltens von Sendern und Empfängern an einem CAN-FD-Bus im Fehlerfall.

Der CAN- / CAN-FD-Bus ist ein serielles Bussystem, bei dem der Zugriff der Busteilnehmer auf den Bus durch Arbitrierung geregelt wird. Durch die Arbitrierung wird der zeitgleiche Zugriff von Busteilnehmern auf den Bus verhindert. Dazu weisen die auf den Bus zu sendenden Botschaften (Frames) zu Beginn ein Arbitrierungsfeld mit einem Bitmuster (Identifier) auf. Durch das Bitmuster ist die Botschaft auf dem Bus eindeutig identifizierbar. Gleichzeitig wird durch das Bitmuster eine Priorität der Botschaft festlegt. Eine Botschaft mit höherer Priorität bekommt gegenüber Botschaften mit niederer Priorität das Senderecht. Kollisionen können so ausgeschlossen werden.

Die Busteilnehmer besitzen kein gemeinsames Taktsignal, sondern arbeiten asynchron mit einem individuellen Takt. Die entstehenden Unterschiede können während des Sendens und Empfangens durch Synchronisierung ausgeglichen werden. Die Synchronisierung erfolgt jeweils bei Signalwechseln von einem rezessiven Buspegel (entspricht logisch 1) zu einem dominanten Buspegel (entspricht logisch 0).

CAN-FD ist vollständig kompatibel zu CAN. Im Unterschied zu CAN-Botschaften, mit einer maximalen Datenfeldgröße von 8 Byte, lassen sich in einer CAN-FD-Botschaft, mit einer maximalen Datenfeldgröße von 64 Byte, mehr Nutzdaten auf einmal transportieren.

Weiterhin arbeitet der CAN-FD-Standard (FD = Flexible data rate) innerhalb einer Botschaft mit unterschiedlichen Übertragungsgeschwindigkeiten. Die Nutzdaten werden mit einer höheren Bitrate übertragen, während die restlichen Teile der Botschaft in der nominalen (niedrigeren) Bitrate übertragen werden. Zum Umschalten auf die hohe Bitrate ist vor dem Datenfeld ein spezielles Schalt-Bit (Bit rate switch) angeordnet. Die Rückschaltung zur nominalen Bitrate erfolgt am Begrenzungs-Bit (Delimiter) hinter der Prüfsumme oder sofort nach einem erkannten Fehler.

Wird von einem Busteilnehmer ein Fehler erkannt, sendet dieser eine Fehlermeldung (Error frame) auf den Bus, die allen anderen Busteilnehmern signalisiert, diese fehlerhafte Botschaft zu verwerfen, und die ein erneutes Senden der Botschaft veranlasst. Entsprechend der Spezifikation muss das Senden der Fehlermeldung mit der nominalen (niedrigeren) Bitrate erfolgen.

Für eine fehlerfreie Kommunikation auf dem CAN- / CAN-FD-Bus ist die Bitrate von entscheidender Bedeutung. Deshalb ist es sehr wichtig, die spezifikationsgerechte Funktion der Bitratenumschaltung für die sende- und empfangsseitige Fehlererkennung der Busteilnehmer zu überprüfen. Ein Busteilnehmer muss zum Absetzen oder Empfangen der Fehlerbotschaft innerhalb des mit höherer Bitrate gesendeten Teils der Botschaft stets zuverlässig in die nominale Bitrate wechseln.

DE 10 2009 039200 A1 betrifft ein Verfahren zur Ermittlung des eingestellten Abtastzeitpunktes eines CAN-Gerätes. Der Erfindung liegt die Aufgabe zugrunde, eine Möglichkeit aufzuzeigen, durch die es mit möglichst geringem Aufwand gelingt, den Abtastzeitpunkt auch bei auftretenden Kollisionen unter realen Bedingungen sicher zu ermitteln. Erfindungsgemäß wird die Aufgabe mit einem Verfahren zur Ermittlung des eingestellten Abtastzeitpunktes eines CAN-Gerätes, wobei alle CAN-Teilnehmer über eine Arbitrierung verfügen und ein Senden der höchst prioren Botschaft (Identifier) 0x0 nicht unterbrechen, dadurch gelöst, dass ein Testsignal mittels eines Funktionsgenerators erzeugt wird, welches aus zwei CAN-Botschaften mit dem höchst prioren Identifier 0x0 besteht und mit minimalen zeitlichen Abstand (Interframe Space) gesendet wird, wobei immer nur die zweite Botschaft entsprechend des aktuellen Testschrittes manipuliert wird und die Beobachtung durch einen CAN-Teilnehmer realisiert wird, wobei der Abtastzeitpunkt des Monitors unterhalb des Abtastzeitpunktes des DUT liegt.

Aufgabe der Erfindung ist es, ein Testverfahren vorzuschlagen, das eine einfache und sichere Überprüfung einer Bitratenumschaltung nach dem CAN-FD-Standard gewährleistet.

Erfindungsgemäß wird die Aufgabe gelöst durch ein Verfahren zum Prüfen des spezifikationsgerechten Verhaltens von Busteilnehmern an einem CAN-FD-Bus nach Anspruch 1.

Nachfolgend soll die Erfindung anhand eines Ausführungsbeispiels näher erläutert werden. In der zugehörigen Zeichnung zeigt:

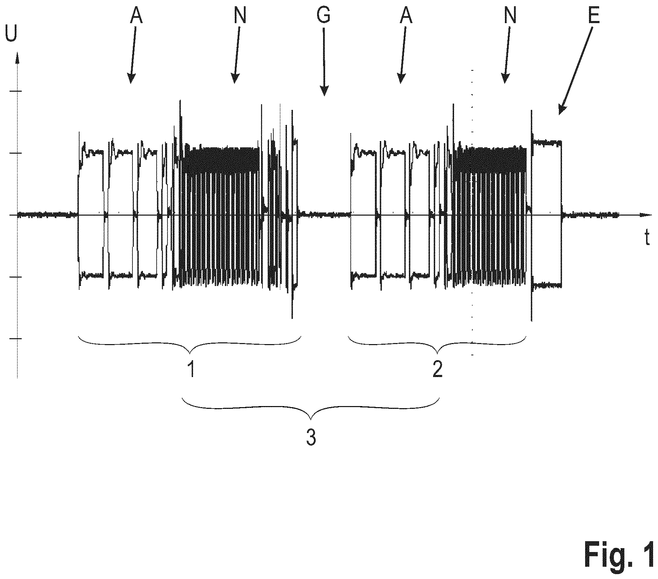

- Fig. 1: einen prinzipiellen Signalverlauf des Testsignals.

Bei einem Verfahren zum Prüfen des spezifikationsgerechten Verhaltens von Busteilnehmern an einem CAN-FD-Bus wird in einem ersten Verfahrensschritt ein Funktionsgenerator und ein Messgerät in den CAN-FD-Bus eines bestehenden Netzwerks eingebunden. Das Netzwerk besteht aus einem CAN-FD-Controller und einem zu testenden Busteilnehmer, die sich in einer Kommunikation befinden.

Der CAN-FD-Controller wird zur Aufzeichnung der Kommunikation auf dem CAN-FD-Bus verwendet und kann eine eventuell erforderliche Restbussimulation für den zu testenden Busteilnehmer bereitstellen.

In einem zweiten Verfahrensschritt wird mit dem Funktionsgenerator ein Testsignal 3 erzeugt und auf dem CAN-FD-Bus gesendet. Wie in Fig. 1 anhand einer Aufzeichnung des Testsignals 3 dargestellt, besteht das Testsignal 3 aus einer ersten Botschaft 1 und einer zweiten Botschaft 2.

Die erste Botschaft 1 ist eine der CAN-FD-Spezifikation entsprechende Botschaft mit einem in einer niedrigeren Bitrate gesendeten Arbitrierungsfeld A (Identifier) und mit in einer höheren Bitrate gesendeten Nutzdaten N.

Mit dem Arbitrierungsfeld A wird eine Priorität der Botschaften auf dem CAN-FD-Bus festgelegt. Das Arbitrierungsfeld A der ersten Botschaft 1 weist die höchste Priorität (Identifier 0) auf. Dadurch ist sicher gestellt, dass die erste Botschaft 1 den Arbitriervorgang bei einem zeitgleichen Zugriff mehrerer Busteilnehmer auf den CAN-FD-Bus gewinnt und damit gesendet werden kann. Dieses Vorgehen ist notwendig, da der Funktionsgenerator selbst über keine Mittel zum Kontrollieren eines kollisionsfreien Sendens von Botschaften verfügt.

Mittels der ersten Botschaft 1 wird überprüft, ob der CAN-FD-Bus zur Durchführung des Prüfverfahrens frei ist. Das ist der Fall, wenn der CAN-FD-Controller die erste Botschaft 1 korrekt auf dem CAN-FD-Bus erkannt hat. Erfolgt das Senden der ersten Botschaft 1 durch den Funktionsgenerator bei bereits belegtem CAN-FD-Bus (Kollisionsfall), wird das Testsignal 3 nicht vom CAN-FD-Controller erkannt und ein erneutes Senden des Testsignals 3 veranlasst.

Die erste Botschaft 1 wird weiterhin dazu verwendet, Fehlermeldungen E (Error frames) zu unterdrücken, die der CAN-FD-Controller beim Erkennen eines Fehlers auf dem CAN-FD-Bus ausgeben würde. Dadurch ist sicher gestellt, dass eine Reaktion auf das Testsignal 3 auch wirklich von dem zu testenden Busteilnehmer stammt.

Außerdem wird die erste Botschaft 1 zum Triggern des Messgeräts verwendet, mit dem das Testsignal 3 und die Reaktion des zu testenden Busteilnehmers aufgezeichnet werden.

Die zweite Botschaft 2 ist ebenfalls eine der CAN-FD-Spezifikation entsprechende Botschaft, mit dem in der niedrigeren Bitrate gesendeten Arbitrierungsfeld A und den in der höheren Bitrate gesendeten Nutzdaten N. Das Arbitrierungsfeld A hat die höchste Priorität (Identifier 0).

Die zweite Botschaft 2 ist der ersten Botschaft 1 mit einem minimalen Sendeabstand G von ≤10 Bit-Zeiten nachgeordnet. Dadurch ist sichergestellt, dass zwischen der ersten Botschaft 1 und zweiten Botschaft 2 keine weiteren Botschaften gesendet werden können.

In der zweiten Botschaft 2 ist in den mit der höheren Bitrate übertragenen Nutzdaten N ein Fehler eingebaut, indem sie nach einem rezessiven Bit (logisch 1) abgebrochen wird. Dieser Fehler verstößt gegen das spezifikationsgemäße Protokoll, das beim Senden von fünf aufeinanderfolgenden gleichwertigen Bits das Senden eines komplementären Füll-Bits (Stuff-bit) vorschreibt. Der Fehler veranlasst den zu testenden Busteilnehmer zur Ausgabe einer Fehlermeldung E (Error frame). Da sich der Fehler in den mit der höheren Bitrate gesendeten Nutzdaten N befindet, ist sichergestellt, dass der zu testende Busteilnehmer den CAN-FD-Bus ebenfalls mit der höheren Bitrate ausliest und zum Ausgeben der Fehlermeldung E spezifikationsgemäß auf die niedrigere Bitrate umschalten muss.

Die auf den Fehler folgende Fehlermeldung E weist einen dominanten (logisch 0) Buspegel auf. Durch den Übergang von der mit dem rezessiven Bit endenden zweiten Botschaft 2 zum dominanten Buspegel der Fehlermeldung E kann die Fehlermeldung E sicher erkannt und deren Länge präzise ausgemessen werden.

In einem letzten Verfahrensschritt wird das spezifikationsgerechte Verhalten des zu testenden Busteilnehmers überprüft. Dazu wird der Buspegel des Testsignals 3 und der darauf folgenden Fehlermeldung E mit einem Oszilloskop aufgenommen und die Fehlermeldung E vermessen. Wie in Fig. 1 in der zweiten Botschaft 2 zu erkennen, gibt es in den mit der höheren Bitrate gesendeten Nutzdaten N einen abrupten Abbruch, gefolgt von der Fehlermeldung E, die in der niedrigeren Bitrate gesendet wird. Anhand der Länge der dominanten Fehlermeldung E kann festgestellt werden, ob die Umschaltung von der höheren zur niedrigeren Bitrate spezifikationsgerecht erfolgt ist.

### Bezugszeichenliste

- 1: erste Botschaft
- 2: zweite Botschaft
- 3: Testsignal
- A: Arbitrierungsfeld (Identifier)
- E: Fehlermeldung (Error frame)
- G: Sendeabstand
- N: Nutzdaten

## Patentansprüche

1. Verfahren zum Prüfen des spezifikationsgerechten Verhaltens von Busteilnehmern an einem Controller Area Network with Flexible Data-Rate, CAN-FD-Bus, mit den Schritten:
- Einbinden eines Funktionsgenerators und eines Messgeräts in einen CAN-FD-Bus eines Netzwerks, bestehend aus einem CAN-FD-Controller und einem zu testenden Busteilnehmer, die sich in einer Kommunikation befinden,
- Erzeugen eines Testsignals (3) am Funktionsgenerator, enthaltend eine erste Botschaft (1) und eine zweite Botschaft (2), wobei die erste Botschaft (1) als eine spezifikationsgemäße Botschaft mit einem in einer niedrigen Bitrate gesendeten Arbitrierungsfeld (A) und in einer höheren Bitrate gesendeten Nutzdaten (N) und die zweite Botschaft (2) mit einem minimalen Sendeabstand (G) als eine fehlerhafte Botschaft gesendet werden, wobei der Fehler in der zweiten Botschaft (2) in den mit der höherer Bitrate gesendeten Nutzdaten (N) der zweiten Botschaft (2) eingebaut wurde,
- Aufnehmen eines Buspegels des Testsignals (3) und einer darauffolgenden Fehlermeldung (E) mit dem Messgerät und
- Vermessen der dem Testsignal (3) folgenden Fehlermeldung (E) des zu testenden Busteilnehmers, so dass anhand der Länge der vermessenen Fehlermeldung (E) festgestellt wird, ob eine Umschaltung von der höheren zur niedrigeren Bitrate spezifikationsgerecht erfolgt ist.

2. Verfahren nach Anspruch 1, **dadurch gekennzeichnet, dass** die erste Botschaft (1) und die zweite Botschaft (2) in dem Arbitrierungsfeld (A) die höchste Priorität aufweisen.

3. Verfahren nach Anspruch 1, **dadurch gekennzeichnet, dass** die zweite Botschaft (2) einen rezessiven Buspegel am Ende aufweist.

## Claims

1. A method for testing the behaviour of bus subscribers on a Controller Area Network with Flexible Data-Rate, CAN-FD bus, in line with specifications, comprising the steps of:
- including a function generator and a measuring device in a CAN-FD bus of a network consisting of a CAN-FD controller and a bus subscriber to be tested, which are in communication,
- generating a test signal (3) at the function generator comprising a first message (1) and a second message (2), wherein the first message (1) is transmitted as a message in line with specifications with an arbitration field (A) transmitted at a low bit rate and payload data (N) transmitted at a higher bit rate and the second message (2) is transmitted with a minimum transmission distance (G) as an erroneous message, the error in the second message (2) having been incorporated in the payload data (N) of the second message (2) that are transmitted at the higher bit rate,
- recording a bus level of the test signal (3) and a subsequent error message (E) with the measuring device and
- measuring the error message (E) of the bus subscriber to be tested, said error message (E) following the test signal (3), so that it can be determined on the basis of the length of the measured error message (E) whether a switchover from the higher to the lower bit rate has taken place in line with specifications.

2. The method according to claim 1, **characterised in that** the first message (1) and the second message (2) have the highest priority in the arbitration field (A).

3. The method according to claim 1, **characterised in that** the second message (2) has a recessive bus level at the end.

## Revendications

1. Procédé pour tester le comportement conforme à la spécification d'abonnés de bus sur un réseau de contrôle de zone avec un bus à débit de données flexible, CAN-FD, comprenant les étapes suivantes :
- intégration d'un générateur de fonctions et d'un dispositif de mesure dans un bus CAN-FD d'un réseau composé d'un contrôleur CAN-FD et d'un abboné de bus à tester, qui sont en communication,
- génération d'un signal de test (3) au niveau du générateur de fonctions, comprenant un premier message (1) et un deuxième message (2), où le premier message (1) est transmis en tant que message selon la spécification avec un champ d'arbitrage (A) transmis à un faible débit binaire et des données utiles (N) transmises à un débit binaire plus élevé et le deuxième message (2) est transmis avec une distance de transmission minimale (G) en tant que message erroné, l'erreur dans le deuxième message (2) ayant été incorporée dans les données utiles (N) du deuxième message (2) transmises au débit binaire plus élevé,
- enregistrement d'un niveau de bus du signal de test (3) et d'un message d'erreur subséquent (E) avec le dispositif de mesure et
- mesure du message d'erreur (E) de l'abonné de bus à tester après le signal de test (3), afin de déterminer, sur la base de la longueur du message d'erreur (E) mesuré, si une commutation du débit binaire supérieur au débit binaire inférieur a eu lieu conformément à la spécification.

2. Procédé selon la revendication 1, **caractérisé en ce que** le premier message (1) et le deuxième message (2) ont la priorité la plus élevée dans le champ d'arbitrage (A).

3. Procédé selon la revendication 1, **caractérisé en ce que** le deuxième message (2) a un niveau de bus récessif à la fin.
